# EUROPEAN PATENT SPECIFICATION

(11) **EP 0 443 992 B1**
(45) Date of publication and mention of the grant of the patent: **27.07.1994**
(21) Application number: 91830056.7
(22) Date of filing: 20.02.1991
(51) Int. Cl.: F16H 59/02, F16H 63/36

(54) **A control device for motor vehicle gearboxes particularly for agricultural tractors**
Schaltung für Fahrzeuggetriebe, insbesondere für landwirtschaftliche Traktoren
Commande de la boîte de vitesse d'un véhicule, plus particulièrement pour des tracteurs agricoles

(30) Priority: 21.02.1990 IT 6712290
(43) Date of publication of application: 28.08.1991
(73) Proprietor: SAME S.p.A., I-24047 Treviglio (Bergamo) (IT)
(72) Inventor: Marras, Gaetano, I-24020 Ranica (Bergamo) (IT); Salvini, Tiziano, I-20097 San Donato Milanese (Milano) (IT)
(74) Representative: Marchitelli, Mauro

(56) References cited:
- EP-A- 0 122 014
- AT-A- 375 748
- GB-A- 2 170 565

## Description

The present invention relates in general to gearboxes for motor vehicles, particularly agricultural tractors.

More particularly, the invention relates to a control device for a gearbox including a mechanical variator with several gear ratios and a mechanical variator with two gear ranges arranged in series, and a single, manual gear lever having an actuating part cooperating with rotatable forked engagement members and which can be moved along a selection line to select one of the forked members, said selection line being coincident with the neutral position of the lever, which can be placed in positions on opposite sides of the selection line to engage the gear ratios, and which can also be operated to effect the permanent engagement of one or other of the gear ranges.

The term "permanent" means a condition in which the gear range engaged is retained regardless of the position assumed by the lever in the engagement of the various gear ratios, a positive command being necessary for its disengagement.

A control device of the type described above is known from GB-A-2170565, according to which, in order to engage the desired gear grange it is necessary for the gear lever to be moved along the selection line beyond the gear-ratio selection positions to an engagement position at which an electrical switch is operated. The switch activates a solenoid valve which controls the supply of pressurised fluid to a fluid actuator means which engages/disengages the gear range.

This solution requires complex and expensive electro-hydraulic actuators which obviously make production difficult and onerous. In the second place, the position of engagement of the electrical gear-range control switch involves a risk of unwanted or accidental range switching. Indeed, since , as stated, this position is on the selection line in which the lever is situated in its neutral position, an accidental movement of the lever from its neutral position to that in which the range is engaged is far from infrequent.

The generic control device is known from EP-B-122014, according to which in order to engage the desired gear range the lever can be moved towards an "up" position or towards a "down" position placed on opposite side to the neutral plane and perpendicularly thereto, i.e. perpendicularly and on opposite sides with respect to the selection line. Also in this case engagement / disengagment of the gear range is accomplished by operation of respective electrical switches associated with a fluid pressure circuit, with the same drawbacks set forth above also in connection with risks of accidental range switching.

From AT-B-375748 it is known a gearbox control device of the slidable-shaft type wherein a single control lever operates a reversing gear for engagement of forward and reverse speed (main gear) and a reduction unit (auxiliary gear). The control rod of the auxiliary gear has a notch cooperating with a rotatable engagement member and having a length oversized with respect to the operating stroke. Between the notches of the control shafts of the main and auxiliary gears a stationary separating baffle is provided, having an aperture for passage in the transverse direction of the engagement member in the neutral position of the main gear control shaft.

The object of the present invention is to provide a control device of the type known from EP-B-122014 which is simpler and cheaper and is also safer as regards the risk of unwanted switching of the gear range and gear ratios selected, as well as providing a better operating precision.

According to the invention, this object is achieved by virtue of the fact that mechanical means are provided for maintaining each gear range selected, the means being releasable only as a result of the engagement of the other range, and of the fact that safety means are operatively associated with the actuating part of the lever and are arranged to prevent the operating of the other fork members when the lever is in a particular selection position for effecting the engagement pivoting of a corresponding fork member, the safety means being movable along the selection line as a result of the movement of the actuating part of the lever.

In a preferred embodiment of the invention, in which the gearbox has three gear ratios, the actuating part of the lever cooperates with first, second and third engagement forks rotatably mounted adjacent each other on a common shaft, the first for being associated with the first and second gear ratios, the second being associated with the third gear ratio and the third being associated with the first and second gear ranges; the first and second fork members being engageable substantially without play by the actuating part of the lever when it is in the corresponding selection positions so that the displacement of the lever from the selection position to the position of engagement of a selected gear ratio and vice versa causes a corresponding pivoting of the respective fork member, whilst the third fork member is engageable with play by the actuating part of the lever when it is in the corresponding selection position so that the displacement of the lever from the selection position to the position of engagement of a selected range causes a corresponding pivoting of the third fork member whilst, during the reverse movement, the third fork member remains stationary.

The invention will now be described in detail with reference to the appended drawings, provided purely by way of non-limiting example, in which:
Figure 1 is a partial schematic perspective view of a gearbox-control device according to the invention,
Figure 2 is a side elevation taken on the arrow II of Figure 1,
Figure 3 is a front elevation taken on the arrow III of Figure 1,
Figure 4 is a horizontal section taken on the line IV-IV of Figure 3,
Figure 5 is a perspective view of a detail of Figure 4, on an enlarged scale,
Figure 6a is a section taken on the line VIa-VIa of Figure 4, on an enlarged scale,
Figure 6b is a section taken on the line VIb-VIb of Figure 4, on an enlarged scale,
Figure 7a and 8a are two view similar to Figure 6a in two different operative conditions,
Figure 7b and 8b are two view similar to Figure 6b in the operative conditions of Figures 7a, 8a, respectively,
Figure 9 is a perspective view of a detail of Figure 5 from below,
Figure 10 et 12 are three views of further details of Figure 2 on an enlarged scale, and
Figure 13 shows the operating grid of the control device in diagrammatic form.

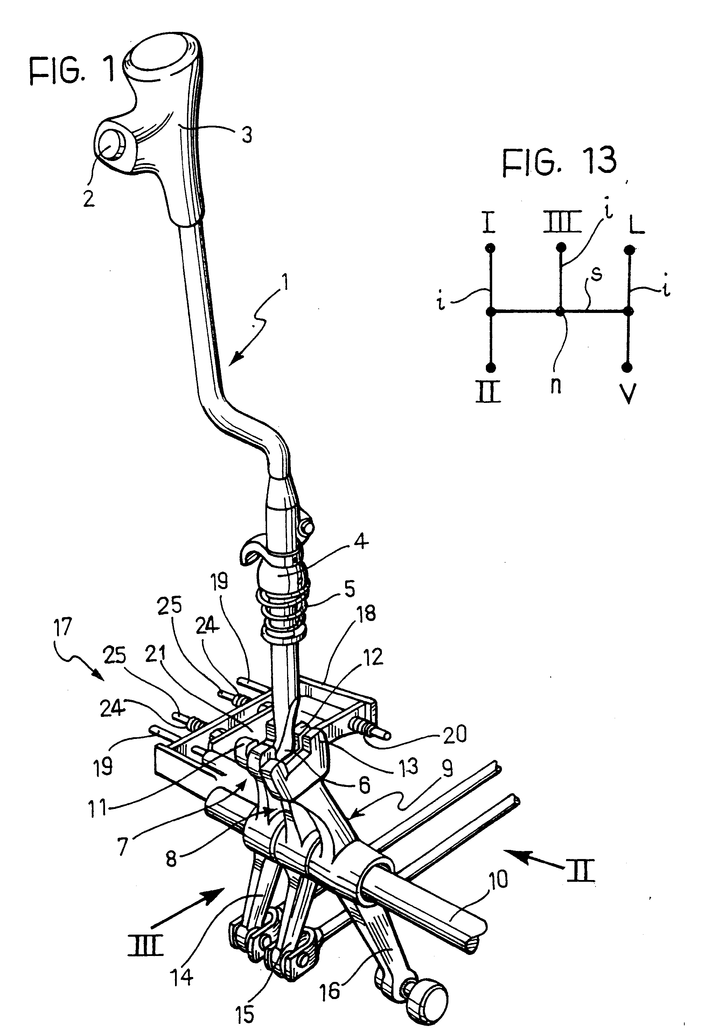

With reference initially to Figures 1 to 3, a manual gear lever for operating a gearbox of a motor vehicle, particularly and agricultural tractor, is indicated 1. In the embodiment illustrated, the gearbox to which the lever 1 is fitted includes, in generally known manner, a mechanical variator with several gear ratios (in the embodiment illustrated there are three) and a mechanical gear-range variator with respective slow and fast ranges. The gear-ratio variator and the gear-range variator are not shown in detail since their arrangement is generally known to experts in the art. For the purpose of the present invention, it suffices to explain that the gear-range variator is arranged in series with the gear-ratio variator so as to provide a gearbox with six ratios (three in the slow range plus three in the fast range) with the capability of changing from any one gear to any other. For application to an agricultural tractor, there is normally associated with the mechanical portion of the gearbox a "power shift" electro-hydraulic portion, that is, a portion having cross-over hydraulic engagement / disengagement clutches which provides a total of up to 18 gear ratios at its output. This "power shift" portion, which is also of generally known type, can be operated by means of a push-button electrical switch 2 carried by a grip 3 situated at the top of the gear lever 1.

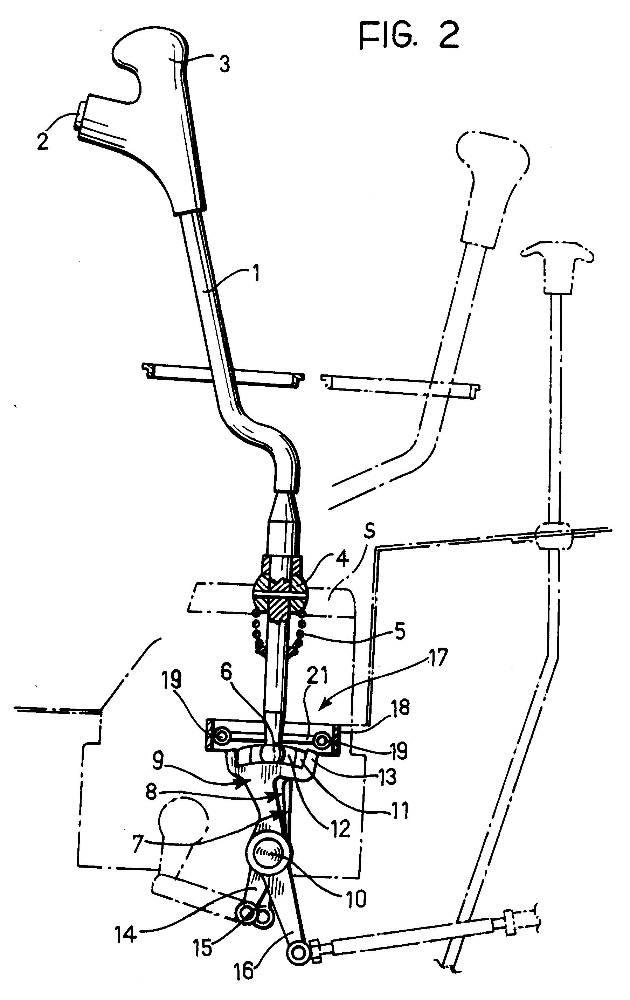

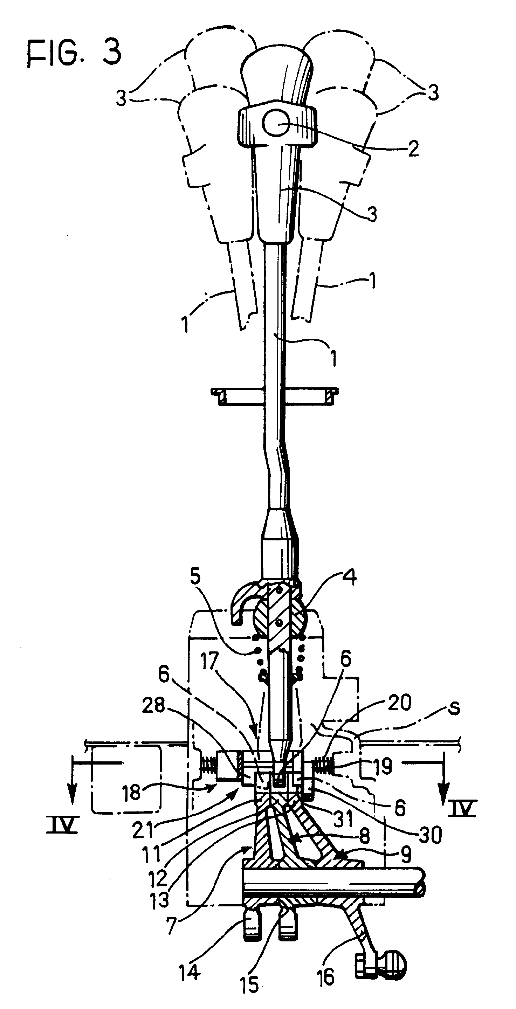

Also in known manner, the lever 1 has a spherical head 4 at its lower end for its articulation to the structure S of the vehicle in the manner shown in Figures 2 and 3. This articulation enables the lever 1 to be moved to the various operative positions shown in Figure 3 as well as diagrammatically in Figure 13. The latter figure shows in plan the operating grid of the lever 1 which is indicated in its central, neutral position n. From this position n, the lever 1 can be moved in opposite directions along a line s, which will be referred to below as the selection line, in order to reach two engagement paths i arranged perpendicular to the selection path s. The movement of the lever 1 along one of the engagement paths i, to one side or the other of the selection path s, causes the engagement of the first or second gear ratios respectively. The movement of the lever 1 along the other engagement path i, again to opposite sides of the selection path s, causes the engagement of the slow or fast gear range. A third engagement path i leads the lever 1 from the central, neutral position n to engage the third gear ratio.

The engagement positions are indicated I, II, III, L, and V respectively in Figure 13.

A helical centring spring 5 is associated, in a conventional manner, with the ball joint 4 and, in cooperation with an additional resilient system which will be described below, tends to return lever 1 to its central, neutral position n when it is positioned on the selection path s and to retain it in that position.

Also in known manner, the lever 1 extends below the ball joint 4 to form a tapered actuating member 6 with rounded sides. The angular movement of the actuating member 6 is obviously the spectacular opposite of that imparted to the lever 1 by means of the grip 3.

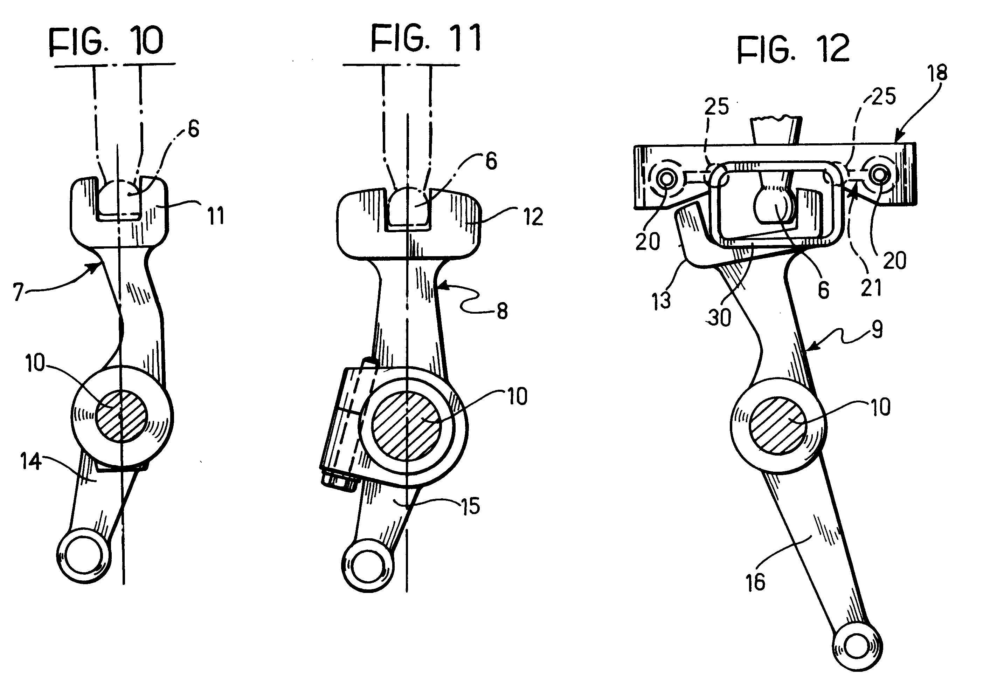

The actuating member 6 cooperates with three engagement members 7, 8 and 9 which are rotatably mounted adjacent each other on a common shaft 10. As shown in greater detail in Figures 10, 11, and 12, each engagement member 7, 8, 9 is constituted by a rocker lever, one arm of which has a fork-shaped free end 11, 12 or 13 for engaging of the actuating member 6 and the opposite arm 14, 15, 16, of which constitutes the respective engagement transmission element. The manner in which the arms 14, 15 and 16 interact with the gearbox to achieve the respective engagement, and the structural components involved, are generally conventional and known to an expert in the art and, for brevity, are not, therefore, described below. For the purposes of the invention, it suffices to explain that the rocker levers 7, 8 and 9 can pivot to opposite sides of the shaft 10 in response to corresponding commands imparted through the actuating member 6 by means of the lever 1 in order to effect the engagement of the first or second gear ratios, the third gear ratio or the slow or fast gear ranges. With reference again to Figures 1 and 10-12, it can be seen that the internal widths of the forks 11 and 12 are only slightly greater that of the actuating member 6 so that the latter engages in the forks in one or other corresponding selection position with limited clearance. The internal width of the fork 13, on the other hand, is much greater than, and almost double, that of the actuating member 6 so that, in the corresponding selection position the latter engages with a large amount of clearance such that, when the actuating member 6 returns to the central position on the selection line s after having effected an engagement pivoting of the rocker lever 9 to one side or the other (slow range L - fast range V respectively), this does not cause any angular movement of the lever 9. The lever 9 therefore remains in the engagement position selected until the lever 1, through the actuating member 6, causes the engagement of the other range. This enables one or other range L, V to be engaged permanently regardless of the position subsequently assumed by the lever 1 in order to engage the three gear ratios I, II, III.

Moreover, the forks 11, 12 and 13 have different external widths: that of the fork 11 is smaller and those of the forks 12 and 13 are larger. This conformation provides a safety function in that it prevents the actuating member 6 from moving accidentally from one fork to another in the engagement positions.

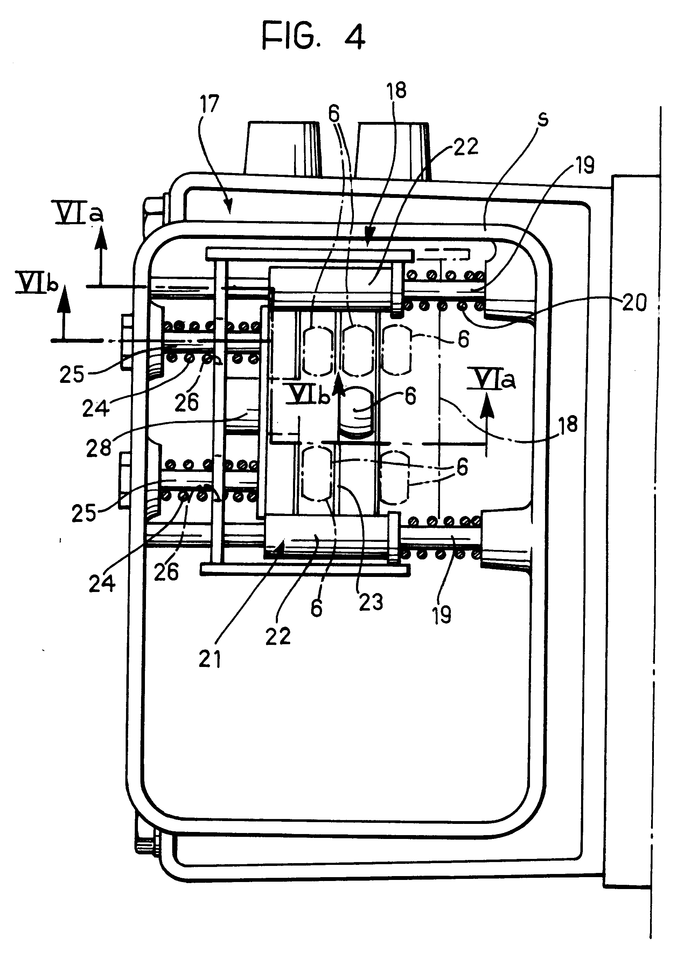

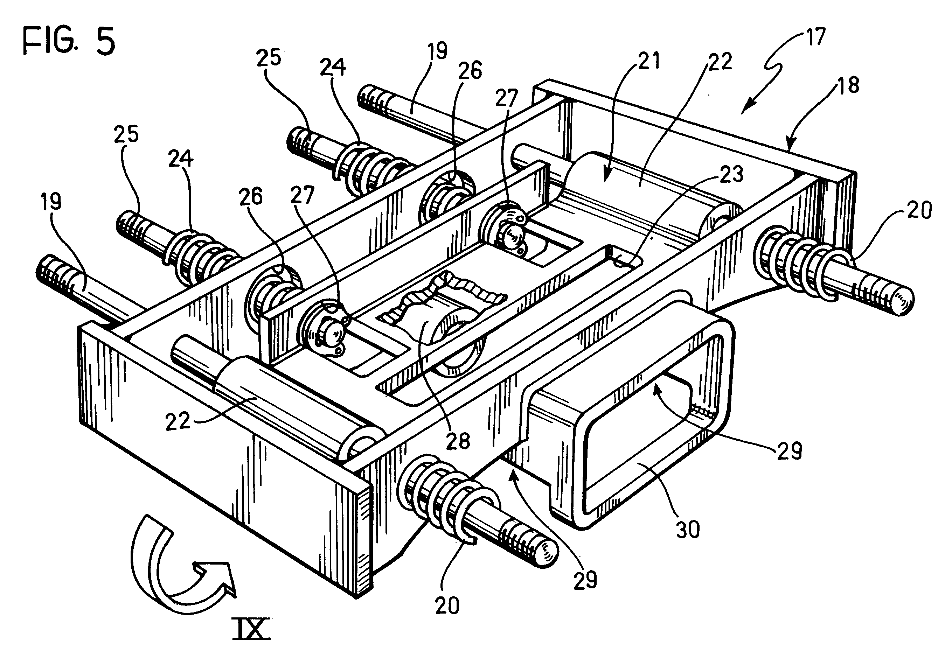

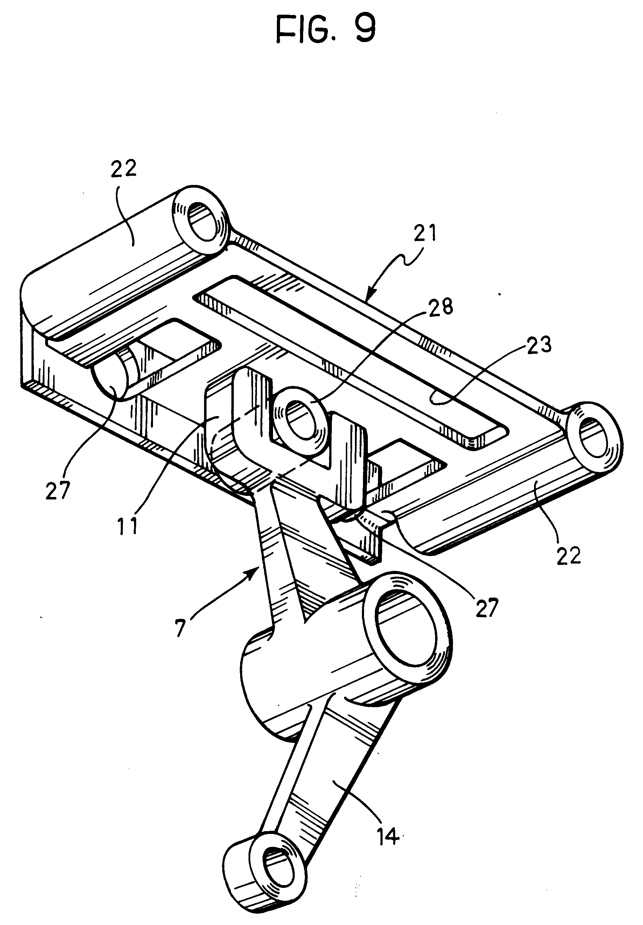

A retaining system is operatively associated with the actuating member 6 for preventing the operation of the fork members which have not been selected when the lever 1 is in a preselected position for effecting the engagement pivoting of a corresponding fork member 11, 12, 13. This safety system, generally indicated 17, is shown in greater detail in Figures 4 to 9. It includes an outer sliding frame 18 which surrounds the region in which the actuating member 6 is situated and which is slidable parallel to the selection line s along two cylindrical guide rods 19 fixed at their ends to the structure S. Two helical compression springs 20 are mounted around the right-hand ends of the guide rods 19, as seen in the drawings, and act between the structure S and the frame 18, biasing the latter towards the left with reference to the drawings.

Within the sliding frame 18 is an inner slider 21 formed at its end with two tubular parts 22 which are slidable on the portions of the guide rods 19 located within the frame 18. The inner slider 21 has a slot 23 extending transverse the selection line s, and hence parallel to the engagement lines i, and in which the actuating member 6 can move. The inner slider 21 is acted on by two helical compression springs 24 mounted on two rods 25 each fixed at one end to the structure S and inserted through respective apertures 26 in the outer frame 18. The opposite ends of the rods 25 are engaged in respective holes 27 in the inner slider 21 and the springs 24 act on the outside of the latter in the opposite direction from that of the springs 20.

A cylindrical locking member 28, whose function will be explained below, is fixed to the underside of the inner slider 21. A second locking member, constituted by a pair of projections 29, is formed beneath that side of the outer sliding frame 18 against which the springs 20 react. A stop member 30 is associated with the second locking member 29 and projects forwardly and downwardly relative thereto.

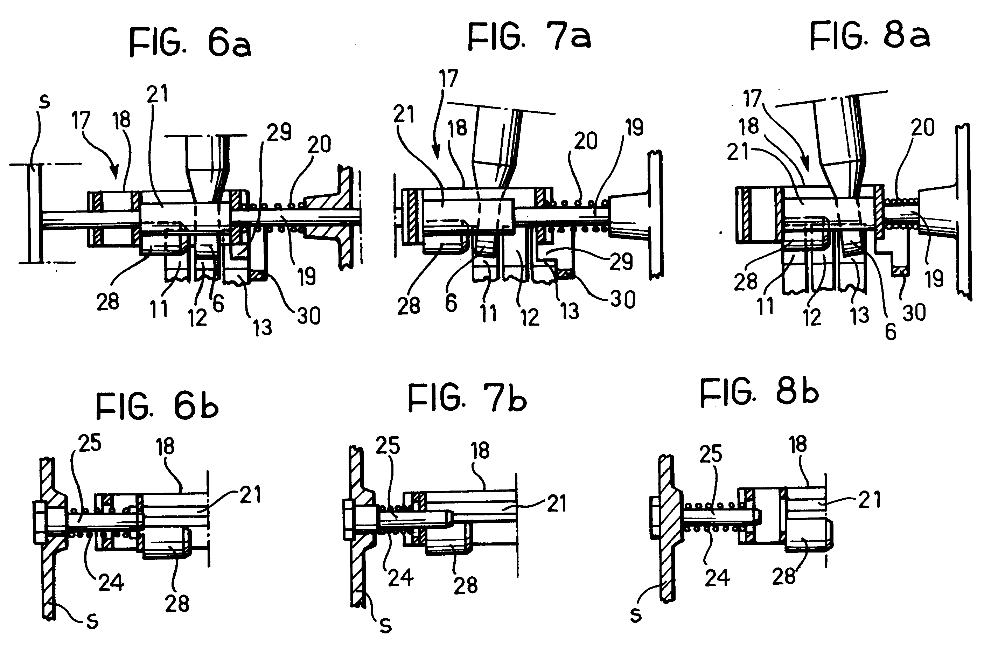

The operation of the device according to the invention will now be described, assuming that one starts from the neutral configuration shown in Figure 1, 2 and 3 (in continuous outline) and 4, as well as Figures 6a and 6b and indicated, as stated, at n in Figure 13.

In this position, the lever 1 is kept centred by the springs 20 and 24 of the device, as well as by the spring 5, with the actuating member 6 engaged in the fork 12 of the lever 8. As can clearly be seen in Figures 6a and 6b, the springs 24 keep the inner slider 21 against the opposite wall of the outer sliding frame 18 which is in turn held by the springs 20 with its stop member 30 face to face with the fork 13 of the lever 9. The locking member 28 of the inner slide 21 and the locking member 29 of the outer sliding frame 18 engage the fork 11 and the fork 13 respectively.

If the lever 1 is moved from this position along the line of engagement i, the third gear ratio is engaged without risk of the accidental operation of the forks 11 and 13.

If, instead, it is wished to engage the first or second gear ratio of the slow or fast range, however, the lever 1 is moved to one side or the other neutral position n along the selection line s.

In the first case, the actuating member 6 is placed in the position for selecting the first or second gear ratios I, II, that is, it is engaged in the fork 11 of the lever 7 (Figures 7a and 7b). As a result of this movement, the inner slider 21 is moved against the action of the springs 24 which contract as a result of the relative movement between the free ends of the guides 25 and the holes 27 in the inner slider 21. This releases the locking member 28 from the fork 11 and the fork 11 is simultaneously advanced slightly in the same direction as the outer sliding frame 18 which is stopped by the abutment of the stop member 30 with the facing surface of the fork 13.

From this position the first or the second gear ratio is engaged by the movement of the lever 1 to one side or the other along the engagement line i.

In the other case, the actuating member 6 is moved to the position in which it engages the fork 13 of the rocker lever 9 (Figures 8a, 8b). This movement causes the inner sliding frame 21 to move against the action of the springs 20 and the outer sliding frame 18 to be entrained simultaneously in the same direction. The locking member 28 thus engages the forks 11 and 12 whilst the locking member 29 is released from the fork 13, enabling the actuating member 6 to be engaged. From this position the movement of the lever 1 to one side or the other along the engagement line i engages the slow gear range L or the fast gear range V. As explained above, this engagement is permanent and is retained when the lever 1 is in any position corresponding to the engagement of any one of the three gear ratios I, II, III. The range engaged can be disengaged solely by the replacement of the actuating member 6 in the fork 13 and the movement of the lever 1 so as to engage the other gear range.

The invention can be applied in the same manner to a gearbox with four gear ratios: in this case the engagement of the fourth ratio can be achieved by means of the fork 12 and the pivoting lever 8 by movement of the lever 1 from the neutral position n in the opposite direction from that for engaging the third gear ratio.

## Claims

1. A control device of a motor-vehicle gearbox, particularly for an agricultural tractor, the gearbox including a mechanical variator with several gear ratios (I, II, III) and a mechanical variator with two gear ranges (L, V) arranged in series, and a single, manual gear lever (1) having an actuating part (6) cooperating with rotatable forked members (11, 12, 13) and which is movalbe along a selection line (s) to select one of the forked members, said selection line (s) being coincident with the neutral position (n) of the lever (1) which can be placed in positions on opposite sides of the selection line for engagement of the gear ratios and which can also be operated to effect the permanent engagement of one or other of the gear ranges, and wherein to engage one or other of the gear ranges (L, V), the lever (1) can be placed in two corresponding positions also situated on opposite sides of the selection line (s) characterised in that mechanical means (9, 13) are provided for maintaining each gear range (L, V) selected, the means (9, 13) being releasable only as a result of the engagement of the other range (V, L) and in that safety means (17) are operatively associated with the actuating part (6) of the lever (1) and are arranged to prevent the operation of the other fork members when the lever is in a particular selection position for effecting the engagement pivoting of a corresponding fork member (11, 12, 13), the said safety means (17) being movalbe along the selection line (s) as a result of the movement of the actuating part (6) of the lever (1).

2. A device according to Claim 1, in which the gearbox has three gear ratios (I, II, III), characterised in that the actuating part (6) of the lever (1) cooperates with first, second and third forked engagement members (11, 12, 13) rotatably mounted adjacent each other on a common shaft (10), the first fork (11) being associated with the first and second gear ratios (I, II), the second fork (12) being associated with the third gear ratio (III) and the third fork (13) being associated with the first and second gear ranges (L, V); the first and second fork members (11, 12) being engageable substantially without play by the actuating part (6) of the lever (1) when it is in the corresponding selection positions so that the displacement of the lever (1) from the selection position to the position of engagement of a selected gear ratio and vice versa causes a corresponding pivoting of the respective fork member (11, 12) whilst the third fork member (13) is engageable with play by the actuating part (6) of the lever (1) when it is in the corresponding selection position so that the displacement of the lever (1) from the selection position to the position of engagement of a selected range causes a corresponding pivoting of the third fork member (13) whilst, during the reverse movement, the fork member (13) remains stationary.

3. A device according to Claim 2, characterised in that the safety means (17) comprise:
- an outer sliding frame (18) which surrounds the actuating part (6) of the lever (1) and is slidable parallel to the selection line (s) along stationary guides (19) against the action of first resilient biassing means (20);
- an inner slider (21) mounted for sliding within the outer sliding frame (18) along the guides (19) and against the action of second resilient biassing means (24) opposing the first resilient biassing means (20), the inner slider (21) having a slot (23) which extends transverse the selection line (s) and in which the actuating part (6) of the lever (1) can move;
- a first locking member (28) carried by the inner slider (21) and adapted to engage the first fork member (11) in the position of selection of the third gear ratio (III) and the first and second fork members (11, 12) in the position of selection of the gear ranges (L, V);
- a second locking member (29) carried by the outer sliding frame (18) and adapted to engage the third fork member (13) in the positions of selection of the third (III) and first and second (I, II) gear ratios.

4. A device according to Claim 3, characterised in that it further includes stop means (30) carried by the outer sliding frame (18) for cooperating with the third fork member (13) to stop the outer frame (18) in the position in which the second locking member (29) is engaged in the third fork member (13) during the movement from the position of selection of the third gear ratio (III) to the position of selection of the first or second gear ratios (I, II).

5. A device according to any one of the preceding claims, characterised in that the lever (1) has an electrical push-button control (2) for operating further, electrically-piloted portions of the gearbox.

## Patentansprüche

1. Steuervorrichtung für das Getriebe eines Kraftfahrzeugs, besonders eines landwirtschaftlichen Traktors, wobei das Getriebe eine mechanische Schalteinrichtung mit mehreren Gängen (I, II, III) und eine mechanische Schalteinrichtung mit zwei Gangbereichen (L, V), die hintereinander angeordnet sind, sowie einen einzigen Handschalthebel (1) aufweist, der einen Betätigungsteil (6) besitzt, der mit drehbaren Gabelelementen (11, 12, 13) zusammenwirkt und längs einer Auswahllinie (s) bewegbar ist, um eines der Gabelelemente auszuwählen, wobei die Auswahllinie (s) mit der Leerlaufstellung (n) des Hebels (1) übereinstimmt, der in Stellungen an gegenüberliegenden Seiten der Auswahllinie angeordnet werden kann, um die Gänge einzulegen, und der weiters betätigt werden kann, um das dauernde Einlegen des einen oder des anderen Gangbereichs zu bewirken, wobei zum Einlegen des einen oder des anderen Gangbereichs (L, V) der Hebel (1) in zwei entsprechenden Stellungen angeordnet werden kann, die gleichfalls an gegenüberliegenden Seiten der Auswahllinie (s) angeordnet sind, dadurch gekennzeichnet, daß eine mechanische Einrichtung (9, 13) vorgesehen ist, um jeden ausgewählten Gangbereich (L, V) zu halten, wobei die Einrichtung (9, 13) nur durch das Einlegen des anderen Bereichs (V, L) freigegeben werden kann, und daß eine Sicherheitseinrichtung (17) dem Betätigungsteil (6) des Hebels (1) betriebsmäßig zugeordnet und so angeordnet ist, um die Betätigung der anderen Gabelelemente dann zu verhindern, wenn sich der Hebel in einer bestimmten Auswahlstellung befindet, um das Verschwenken eines entsprechenden Gabelelements (11, 12, 13) für den Eingriff hervorzurufen, wobei die Sicherheitseinrichtung (17) durch die Bewegung des Betätigungsteils (6) des Hebels (1) entlang der Auswahllinie (s) bewegbar ist.

2. Vorrichtung gemäß Anspruch 1, wobei das Getriebe drei Gänge (I, II, III) besitzt, dadurch gekennzeichnet, daß der Betätigungsteil (6) des Hebels (1) mit einem ersten, zweiten und dritten gabelartigen Eingreifelement (11, 12, 13) zusammenwirkt, die nebeneinander auf einer gemeinsamen Welle (10) drehbar befestigt sind, wobei die erste Gabel (11) dem ersten und zweiten Gang (I, II), die zweite Gabel (12) dem dritten Gang (III) und die dritte Gabel (13) dem ersten und zweiten Gangbereich (L, V) zugeordnet sind; wobei das erste und zweite Gabelelement (11, 12) im wesentlichen ohne Spiel in das Betätigungselement (6) des Hebels (1) eingerückt werden kann, wenn sich dieser in den entsprechenden Auswahlstellungen befindet, so daß die Auslenkung des Hebels (1) aus der Auswahlstellung in die Eingreifstellung eines ausgewählten Gangs und umgekehrt eine entsprechende Verschwenkung des jeweiligen Gabelelements (11, 12) hervorruft, während das dritte Gabelelement (13) mit Spiel in den Betätigungsteil (6) des Hebels (1) eingreifen kann, wenn sich dieser in der entsprechenden Auswahlstellung befindet, so daß die Auslenkung des Hebels (1) aus der Auswahlstellung in die Eingreifstellung eines ausgewählten Bereichs eine entsprechende Verschwenkung des dritten Gabelelements (13) hervorruft, während das Gabelelement (13) während der Rückbewegung ortsfest bleibt.

3. Vorrichtung gemäß Anspruch 2, dadurch gekennzeichnet, daß die Sicherheitseinrichtung (17) enthält:
- einen äußeren Gleitrahmen (18), der den Betätigungsteil (6) des Hebels (1) umgibt und parallel zur Auswahllinie (s) längs ortsfesten Führungen (19) gegen die Wirkung einer ersten elastischen Vorspannungseinrichtung (20) verschiebbar ist;
- einen inneren Schlitten (21), der für eine Verschiebung im äußeren Gleitrahmen (18) längs der Führungen (19) und gegen die Wirkung einer zweiten elastischen Vorspannungseinrichtung (24) verschiebbar ist, die der ersten elastischen Vorspannungseinrichtung (20) gegenüberliegt, wobei der innere Schlitten (21) einen Schlitz (23) besitzt, der quer zur Auswahlli- nie (s) verläuft, wobei sich in ihm der Betätigungsteil (6) des Hebels (1) bewegen kann;
- ein erstes Verriegelungselement (28), das der innere Schlitten (21) trägt und das dazu dient, um in das erste Gabelelement (11) in der Auswahlstellung des dritten Gangs (III) und in das erste und zweite Gabelelement (11, 12) in der Auswahlstellung des Gangbereichs (L, V) einzugreifen;
- ein zweites Verriegelungselement (29), das vom äußeren Gleitrahmen (18) getragen wird und dazu vorgesehen ist, um in das dritte Gabelelement (13) in den Auswahlstellungen des dritten (III) sowie ersten und zweiten (I, II) Gangs einzugreifen.

4. Vorrichtung gemäß Anspruch 3, dadurch gekennzeichnet, daß sie weiters eine Anschlagvorrichtung (30) aufweist, die der äußere Gleitrahmen (18) trägt, um mit dem dritten Gabelelement (13) zusammenzuwirken, um den äußeren Rahmen (18) in jener Stellung anzuhalten, in der das zweite Verriegelungselement (29) in das dritte Gabelelement (13) während der Bewegung von der Auswahlstellung des dritten Gangs (III) zur Auswahlstellung des ersten oder zweiten Gangs (I, II) eingreift.

5. Vorrichtung gemäß irgendeinem der bisherigen Ansprüche, dadurch gekennzeichnet, daß der Hebel (1) eine elektrische Drucktastensteuerung (2) besitzt, um weitere elektrisch gesteuerte Teile des Getriebes in Betrieb zu setzen.

## Revendications

1. Dispositif de commande pour boîte de vitesses de véhicules à moteur, particulièrement pour tracteur agricole, la boîte de vitesses comprenant un variateur mécanique avec plusieurs rapports de multiplication (I, II,III) et un variateur mécanique avec deux régimes de vitesse (L, V) agencés en série, et un seul levier d'embrayage manuel (1) ayant une partie d'actionnement (6) coopérant avec des éléments à fourche rotatifs (11, 12, 13) susceptible de se déplacer le long d'une ligne de sélection (s) pour sélectionner l'un des éléments à fourche, ladite ligne de sélection (s) coïncidant avec la position neutre (n) du levier (1) qui peut être placé dans des positions sur les côtés opposés de la ligne de sélection pour engager les rapports de multiplication et qui peut également être actionné pour effectuer l'engagement permanent de l'un ou l'autre des régimes de vitesse, dans lequel, pour engager l'un ou l'autre des régimes de vitesse (L, V), le levier (1), peut être placé dans deux positions correspondantes également situées sur les côtés opposés de la ligne de sélection (s), caractérisé en ce que des moyens mécaniques (9, 13) sont prévus pour maintenir chaque régime de vitesse (L, V) sélectionné, les moyens (9, 13) ne pouvant être libérés qu'à la suite de l'engagement de l'autre régime (V, L), et en ce que des moyens de sécurité (17) sont associés à la partie d'actionnement (6) du levier (1) et sont agencés pour empêcher le fonctionnement des autres éléments à fourche lorsque le levier est dans une position de sélection particulière pour effectuer le pivotement d'engagement d'un élément à fourche correspondant (11, 12, 13), lesdits moyens de sécurité (17) étant mobiles le long de la ligne de sélection (s) à la suite du mouvement de la partie d'actionnement (6) du levier (1).

2. Dispositif selon la revendication 1, dans lequel la boîte de vitesses a trois rapports de multiplication (I, II, III), caractérisé en ce que la partie d'actionnement (6) du levier (1) coopère avec un premier, un deuxième et un troisième éléments d'engagement à fourche (11, 12, 13) montés à rotation au voisinage les uns des autres sur un arbre commun (10), la première fourche (11) étant associée au premier et au deuxième rapports de multiplication (I, II), la deuxième fourche (12) étant associée au troisième rapport de multiplication (III) et la troisième fourche (13) étant associée au premier et au deuxième régimes de vitesse (L, V), le premier et le deuxième éléments à fourche (11, 12) pouvant être engagés sensiblement sans jeu par la partie d'actionnement (6) du levier (1) lorsqu'il se trouve dans les positions de sélection correspondantes de telle sorte que le déplacement du levier (1) de la position de sélection à la position d'engagement d'un rapport de multiplication sélectionné et vice-versa provoque un pivotement correspondant de l'élément à fourche respectif (11, 12) tandis que le troisième élément à fourche (13) peut être engagé avec un certain jeu par la partie d'actionnement (6) du levier (1) lorsqu'il se trouve dans la position de sélection correspondante de telle sorte que le déplacement du levier (1) de la position de sélection à la position d'engagement d'un régime sélectionné provoque un pivotement correspondant du troisième élément à fourche (13) tandis qu'au cours du mouvement inverse, l'élément à fourche (13) reste stationnaire.

3. Dispositif selon la revendication 2, caractérisé en ce que les moyens de sécurité (17) comprennent:
- un châssis glissant externe (18) qui entoure la partie d'actionnement (6) du levier (1) et peut glisser parallèlement à la ligne de sélection (s) le long de guides stationnaires (19) à l'encontre de l'action d'un premier moyen de sollicitation élastique (20),
- un curseur interne (21) monté à glissement à l'intérieur du châssis glissant externe (18) le long des guides (19) à l'encontre de l'action d'un deuxième moyen de sollicitation élastique (24) s'opposant au premier moyen de sollicitation élastique (20), le curseur interne (21) présentant une fente (23) qui s'étend transversalement à la ligne de sélection (s) et dans laquelle la partie d'actionnement (6) du levier (1) peut se déplacer,
- un premier élément de verrouillage (28) porté par le curseur interne (21) et susceptible d'engager le premier élément à fourche (11) dans la position de sélection du troisième rapport de multiplication (III)et le premier et le deuxième éléments à fourche (11, 12) dans la position de sélection de régimes de vitesse (L, V), et
- un deuxième élément de verrouillage (29) porté par le châssis glissant externe (18) et susceptible d'engager le troisième élément à fourche (13) dans les positions de sélection du troisième rapport de multiplication (III) et du premier et du deuxième rapports de multiplication (I, II).

4. Dispositif selon la revendication 3, caractérisé en ce qu'il comprend par ailleurs un moyen d'arrêt (30) porté par le châssis glissant externe (18) pour coopérer avec le troisième élément à fourche (13) afin d'arrêter le châssis externe (18) dans la position dans laquelle le deuxième élément de verrouillage (29) est engagé dans le troisième élément à fourche (13) au cours du mouvement de la position de sélection du troisième rapport de multiplication (III)à la position de sélection du premier ou du deuxième rapport de multiplication (I, II).

5. Dispositif selon l'une quelconque des revendications précédentes, caractérisé en ce que le levier (1) a une commande électrique à bouton poussoir (2) pour faire fonctionner d'autres parties de la boîte de vitesses à pilotage électrique.
